# EUROPÄISCHE PATENTSCHRIFT

(11) **EP 2 679 857 B1**
(45) Veröffentlichungstag und Bekanntmachung des Hinweises auf die Patenterteilung: **19.06.2019**
(21) Anmeldenummer: 13003226.1
(22) Anmeldetag: 25.06.2013
(51) Int. Cl.: F16F 9/34, F16F 9/53, B62K 25/04

(54) **Stoßdämpfer für ein Fahrrad**
Shock absorber for a bicycle
Amortisseur pour une bicyclette

(30) Priorität: 26.06.2012 DE 102012012534
(43) Veröffentlichungstag der Anmeldung: 01.01.2014
(73) Patentinhaber: DT Swiss AG, 2504 Biel (CH)
(72) Erfinder: Battlogg, Stefan, A-6771 St. Anton i.M. (AT); Pösel, Jürgen, A-6700 Bludenz (AT); Kieber, Michael, A-6780 Schruns (AT); Walthert, Martin, CH-3270 Aarberg (CH)
(74) Vertreter: BSB Patentanwälte Schütte & Engelen Partnerschaft mbB

(56) Entgegenhaltungen:
- EP-A1- 2 456 999
- DE-A1-102009 060 550
- DE-B3- 10 320 005
- US-A1- 2009 294 231

## Beschreibung

Die vorliegende Erfindung betrifft einen Stoßdämpfer für ein wenigstens teilweise muskelgetriebenes Fahrzeug und insbesondere ein Fahrrad. Das Fahrrad kann mit einem Hilfsantrieb und insbesondere einem elektrischen Hilfsantrieb ausgerüstet sein.

Die DE 103 20 005 B3 offenbart einen Schwingungsdämpfer mit verstellbarer Dämpfkraft und einem Druckrohr, in welchem ein Kolben axial verschiebbar gelagert ist, sowie einen das Druckrohr koaxial umgebenden Zylinder mit einer die Dämpfkraft des Schwingungsdämpfers beeinflussenden Mediumfüllung, deren Viskosität sich in Abhängigkeit eines elektrisch versorgten Feldkrafterzeugungselements ändert. Dabei ist der elektrisch versorgte Teil des Feldkrafterzeugungselements außerhalb des Zylinders angeordnet. Innerhalb des Zylinders ist eine Drosselstrecke enthalten, die zwei benachbarte Teilkanäle enthalten kann. Der Schwingungsdämpfer wird an Kraftfahrzeugen eingesetzt.

Die US 2009/294231 A1 (D2) zeigt ein magnetorheologisches Fluidventil, bei dem z. B. zwei durch Drahtstifte in einem definierten Abstand gehaltene Strömungskanäle vorgesehen sind, die zur gezielten Dämpfung eingesetzt werden.

Die DE 10 2009 060 550 A1 betrifft eine Dämpfereinrichtung für ein Zweirad, wobei das Dämpfungsventil im Kolben angeordnet ist.

Mit der WO 2011/009586 A1 ist eine Ventileinrichtung mit einem Durchgangskanal sowie mit einer Felderzeugungseinrichtung bekannt geworden, wobei in dem Durchgangskanal ein durch ein Feld beeinflussbares Fluid vorgesehen ist. Durch gezielte Beeinflussung des Magnetfeldes ist eine Querschnittsfläche des Durchgangskanal einstellbar, der einem Feld bestimmter Stärke aussetzbar ist, sodass der Durchgangskanal auch nur teilweise einem Feld bestimmter Stärke aussetzbar ist.

Im Stand der Technik sind verschiedenste Hinterraddämpfer und Federgabeln für Fahrräder bekannt geworden. Typischerweise umfasst ein Stoßdämpfer eine Federeinheit, um auftretende Stöße abzufedern und eine Dämpfungseinheit, um die Federschwingung zu dämpfen. Bei Hinterradstoßdämpfern werden die Federeinheit und die Dämpfungseinheit in der Regel als integrale Einheit ausgebildet. Bei Federgabeln können die Dämpfungseinheit und die Federeinheit auch separat angeordnet werden.

Dämpfer für Fahrräder werden zumeist mit Öl als Dämpfungsfluid betrieben. Zur Dämpfung wird das Dämpfungsfluid von einer ersten Dämpfungskammer über eine Blende gedrosselt zu einer zweiten Dämpfungskammer geleitet. Die Größe der Öffnung der Blende bestimmt die Stärke der Dämpfung. Die optimale Dämpfung hängt von verschiedenen Faktoren ab, wie beispielsweise dem Gewicht des Fahrers und insbesondere den Eigenschaften des Geländes. Es ist wünschenswert, die Stärke der Dämpfung lastabhängig einzustellen, sodass kleine Stöße weniger stark gedämpft werden als starke Stöße. Bei Fahrten über eine Straße, über einen Waldweg oder direkt durch das Gelände sind deshalb unterschiedliche Dämpfungseinstellungen optimal.

Zur Einstellung und Beeinflussung der Dämpfung sind magnetorheologische und elektrorheologische Fluide bekannt geworden, deren Eigenschaften durch Anlegen eines entsprechenden magnetischen oder elektrischen Feldes beeinflusst werden können. Die in dieser Anmeldung beschriebenen Ausführungsbeispiele eines Dämpfers mit magnetorheologischem Fluid können dementsprechend auch mit elektrorheologischem Fluid aufgebaut werden.

Magnetorheologische Fluide bestehen meistens aus einer Suspension von kleinen, magnetisch polarisierbaren Partikeln, welche in einer Trägerflüssigkeit wie einem Öl fein verteilt sind. Die meist aus Carbonyleisenpulver bestehenden polarisierbaren Partikel weisen typischerweise Durchmesser zwischen etwa 0,1 und 50 Mikrometern auf und bilden unter Einfluss eines magnetischen Feldes kettenartige Strukturen, die eine vom Feld abhängige Schubspannung aufnehmen können. Dadurch kann ähnlich wie durch eine Viskositätsänderung beispielsweise der Strömungswiderstand eines Ventils verändert werden. Der Vorgang ist schnell und reversibel, sodass sich bei Abschaltung des Magnetfelds sich der rheologische Ausgangszustand wieder einstellt. Somit eignen sich magnetorheologische Fluide zum Einsatz an Dämpfern von Fahrrädern.

Bei Stoßdämpfern für Fahrräder ist es oftmals gewünscht unterschiedliche Dämpfungsraten beispielsweise beim Einfedern eines Hinterraddämpfers und beim Ausfedern zu erhalten. Oftmals wird eine höhere Dämpfungsrate beim Ausfedern gewünscht, damit das Fahrrad unter bestimmten Fahrbedingungen optimale Fahreigenschaften erhält. Es ist deshalb beispielsweise mit der WO 2010/007433 A2 ein Stoßdämpfer für Fahrräder bekannt geworden, bei dem das magnetorheologische Fluid beim Einfedern durch ein mit einem Magnetfeld beaufschlagbares Dämpfungsventil geleitet wird. Beim Ausfedern erfolgt die Dämpfung über konventionelle Shim-Ventile, die mechanisch einstellbar sind. Dadurch wirkt das eingestellte Magnetfeld nur beim Einfedern. Grundsätzlich sind somit bei diesem bekannten Stoßdämpfer unterschiedliche Dämpfungsraten beim Einfedern und beim Ausfedern möglich, da unterschiedliche Strömungskanäle verwendet werden. Nachteilig an dem bekannten System ist aber, dass eine elektronische Einstellung der Dämpfungskraft nur für Einfedervorgänge wirkt, während für Ausfedervorgänge die Dämpfungskraft mechanisch eingestellt werden muss.

Vor dem angeführten Stand der Technik ist es deshalb die Aufgabe der vorliegenden Erfindung einen Stoßdämpfer für ein wenigstens teilweise muskelgetriebenes Fahrrad zur Verfügung zu stellen, welcher über ein Dämpfungsventil mit einem feldempfindlichen Fluid verfügt und bei dem die Dämpfungseigenschaften flexibel einstellbar sind und welcher in Abhängigkeit von der Bewegungsrichtung unterschiedliche starke und in beide Richtungen steuerbare Dämpfungen ermöglicht.

Diese Aufgabe wird gelöst durch einen Stoßdämpfer mit den Merkmalen des Anspruchs 1. Bevorzugte Weiterbildungen sind Gegenstand der Unteransprüche. Weitere Vorteile und Merkmale der Erfindung ergeben sich aus der allgemeinen Beschreibung und der Beschreibung des Ausführungsbeispiels.

Ein erfindungsgemäßer Stoßdämpfer ist für ein wenigstens teilweise muskelgetriebenes Fahrrad vorgesehen und weist eine Dämpfereinrichtung auf, der eine erste und wenigstens eine zweite Dämpferkammer zugeordnet sind. Dabei sind die erste und die zweite Dämpferkammer über wenigstens ein Dämpfungsventil miteinander hydraulisch gekoppelt. Wenigstens in dem Dämpfungsventil ist wenigstens ein Strömungskanal mit einem feldempfindlichen rheologischen Medium vorgesehen. Dem wenigstens einen Dämpfungsventil ist wenigstens eine Felderzeugungseinrichtung zugeordnet, welche zur Erzeugung und Steuerung einer Feldstärke in dem Strömungskanal des Dämpfungsventils dient. Der Strömungskanal in dem Dämpfungsventil umfasst wenigstens einen Sammelraum, welcher über eine Mehrzahl an Strömungsöffnungen hydraulisch mit der ersten Dämpferkammer verbunden ist. Wenigstens eine dieser Strömungsöffnungen ist als Durchgangsöffnung und wenigstens eine dieser Strömungsöffnungen ist als mit einem Einwegventil versehene verschließbare Ventilöffnung ausgebildet. Weiterhin ist der Sammelraum hydraulisch über wenigstens eine Mehrzahl fächerartiger Dämpfungskanäle hydraulisch mit der zweiten Dämpferkammer verbunden. Die fächerartigen Dämpfungskanäle sind voneinander jeweils durch wenigstens eine Fächerwandung getrennt.

Der erfindungsgemäße Stoßdämpfer hat viele Vorteile. Dadurch, dass das Dämpfungsventil einen Strömungskanal mit fächerartigen Dämpfungskanälen umfasst, an die sich ein Sammelraum anschließt, der über eine Mehrzahl an Strömungsöffnungen mit dem anderen Ende des Dämpfungsventils verbunden ist, kann durch die teilweise als Einwegventil ausgebildeten Strömungsöffnungen eine unterschiedliche Dämpfungscharakteristik für die unterschiedlichen Strömungsrichtungen zur Verfügung gestellt werden.

Während in eine Strömungsrichtung die mit Einwegventilen versehenen Strömungsöffnungen das feldempfindliche rheologische Medium durchströmen lassen, wird in die entgegengesetzte Strömungsrichtung das feldempfindliche rheologische Medium nur durch die als Durchgangsöffnung ausgebildeten Strömungsöffnungen durchgeleitet. Die Strömungsöffnungen sind dabei in Reihe mit den fächerartigen Dämpfungskanälen geschaltet, sodass durch die verschlossenen Strömungsöffnungen ein deutlich reduzierter Strömungsquerschnitt in eine Strömungsrichtung zur Verfügung steht, wodurch unterschiedliche Dämpfungscharakteristiken in beide Strömungsrichtungen vorgegeben werden. Des Weiteren strömt in beiden Strömungsrichtungen das feldempfindliche rheologische Medium durch alle fächerartigen Dämpfungskanäle und kann dort je nach Strömungsrichtung unterschiedlichen Feldstärken ausgesetzt werden.

Versuche haben ergeben, dass der Verschluss einzelner Dämpfungskanäle zu unbefriedigenden Ergebnissen oder sogar Ausfällen solcher Stoßdämpfer führen kann. Wird nur ein einziger fächerartiger Dämpfungskanal von mehreren durch ein Einwegventil verschlossen, so können im Betrieb erheblich unterschiedliche Drücke in den einzelnen Dämpfungskanälen wirken. Das kann zu einer temporären oder dauerhaften Verbiegung einer dünnen Fächerwandung führen, sodass die Leistungsfähigkeit des Stoßdämpfers nicht mehr gegeben ist oder der Stoßdämpfer sogar insgesamt zerstört werden kann. Dadurch, dass erfindungsgemäß die fächerartigen Dämpfungskanäle in einen Sammelraum münden, an den sich wiederum die teilweise verschließbaren Durchgangsöffnungen anschließen, wird jederzeit gewährleistet, dass alle fächerartigen Dämpfungskanäle gleichzeitig durchströmt werden. Dadurch wird wenigstens näherungsweise für ähnliche Druckniveaus innerhalb der fächerartigen Dämpfungskanäle gesorgt.

Gleichzeitig wird aber erfindungsgemäß erreicht, dass unterschiedliche Strömungsquerschnitte in der Druckstufe und in der Zugstufe vorhanden sind, sodass unterschiedliche Grunddämpfungen in der Druckstufe und in der Zugstufe vorliegen. Weiterhin kann sowohl in der Druckstufe als auch in der Zugstufe ein gewünschtes Feld durch die Felderzeugungseinrichtung angelegt werden, sodass die genaue Höhe der Dämpfung beliebig steuerbar ist. Grundsätzlich kann dabei mit ähnlichen Feldstärken in der Druck- und in der Zugstufe gearbeitet werden. Selbst bei identischen Feldstärken werden je nach Strömungsrichtung sehr unterschiedliche Dämpfungen erzielt.

Ein wesentlicher Vorteil eines erfindungsgemäßen Stoßdämpfers ist, dass durch die je nach Strömungsrichtung unterschiedlichen Dämpfungen ein mit einem solchen Stoßdämpfer ausgerüstetes Fahrrad auch ohne dessen Ansteuerung "fahrbar" bleibt. Bei Ausfall der Ansteuerung oder Spannungsversorgung wird durch die unterschiedliche Dämpfung in Druck- und Zugstufe eine Grunddämpfung erzeugt, die z. B. an den gewünschten Arbeitsbereich angepasst sein kann.

Zudem wird weniger Energie zur Ansteuerung benötigt, wenn die Grunddämpfung schon grundsätzlich an den gewünschten Arbeitsbereich angepasst wird. Um eine gewünschte Kennlinie zu erreichen muss durch die Felderzeugungseinrichtung in diesem Fall nur vergleichsweise wenig und jedenfalls weniger Feld- bzw. Kraftdifferenz erzeugt werden.

Es ist möglich, dass nicht nur zwei fächerartige Dämpfungskanäle vorgesehen sind, sondern es können auch drei oder mehr fächerartige Dämpfungskanäle vorhanden sein. Möglich ist es auch, dass mehrere Gruppen von fächerartigen Dämpfungskanälen beispielsweise über den Umfang verteilt angeordnet sind.

Vorzugsweise sind die fächerartigen Dämpfungskanäle derart angeordnet, dass sie jeweils bei der Druckstufen- und der Zugstufendämpfung aktiv sind.

In vorteilhaften Ausgestaltungen sind die Einwegventile derart angeordnet und strukturiert, dass sie bei der Druckstufendämpfung automatisch öffnen und bei der Zugstufendämpfung automatisch schließen. Es ist bevorzugt, wenn für das Schalten der Einwegventile wenig Kraft benötigt wird, um ein feinfühliges und schnelles Ansprechen gewährleisten zu können.

Die Auslegung der Einwegventile ist vorzugsweise derart, dass sie dem Druck in gesperrten Zustand standhalten können und in Strömungsrichtung mit wenig Kraft einen möglichst großen Strömungsquerschnitt freigeben. Vorteilhaft ist dabei ein Anschlag um ein Überdehnen des Materials zu vermeiden. Bewährt haben sich Einwegventile, die aus einem oder mehreren gestapelten Federplättchen bestehen.

Es ist bevorzugt, das Einwegventil auch wie ein Shim in herkömmlichen Dämpfern zu verwenden. Solche Shim-Ventile oder Pakete von Scheibenventilen weisen in der Regel einen nichtlinearen Kraftverlauf auf, um die gewünschte Dämpferkennlinie zu erzeugen. Bei dem erfindungsgemäßen Stoßdämpfer kann über ein Shim-Ventil oder ein Paket von Scheibenventilen ein nichtlinearer Kraftverlauf einer gewünschten Grundkennlinie angenähert werden.

Erfindungsgemäß ist das Dämpfungsventil an einer Dämpfungskolbeneinheit angeordnet, welche den Dämpfungskolben und eine Kolbenstange umfasst. Insbesondere kann das Dämpfungsventil in dem Dämpfungskolben wenigstens im Wesentlichen integriert sein.

Es ist möglich und bevorzugt, dass die mit einem Einwegventil versehenen Strömungsöffnungen im Wesentlichen an dem Dämpfungskolben angeordnet sind. Insbesondere befinden sich wenigstens einige der mit einem Einwegventil versehenen Strömungsöffnungen im Wesentlichen in axialer Ausrichtung auf der Kolbenfläche. Das gewährleistet gute Strömungsbedingungen.

Bevorzugt ist es auch, dass wenigstens eine Durchgangsöffnung an der Kolbenstange vorgesehen ist und dort insbesondere im Wesentlichen radial ausgerichtet ist. Dadurch wird ein Übertritt des feldempfindlichen Fluids aus dem Inneren der Kolbenstange nach außen und umgekehrt ermöglicht. Vorzugsweise erstreckt sich der Sammelraum wenigstens teilweise innerhalb des Kolbens und wenigstens teilweise innerhalb der Kolbenstange. Es ist besonders bevorzugt, dass zwei oder mehr Sammelräume vorgesehen sind.

In bevorzugten Ausgestaltungen weist eine Durchgangsöffnung eine Endanschlagdämpfung auf. Dazu kann beispielsweise die Durchgangsöffnung an der Kolbenstange angeordnet sein und einen zum Dämpfungskolben schräg auslaufenden Einlauf aufweisen. Ein solcher schräg auslaufender Einlauf ermöglicht beispielsweise beim Einfedern eine einfache Endanschlagdämpfung, indem der schräg auslaufende Einlauf und/oder die Durchgangsöffnung beim Ein- oder Ausfedern automatisch verschlossen werden, wodurch in der Nähe wenigstens eines Endanschlages eine ansteigende Dämpfung möglich ist.

Vorzugsweise ist wenigstens eine Federeinrichtung vorgesehen, die eine erste und wenigstens eine zweite mit einem kompressiblen Medium versehene Federkammer umfasst. Insbesondere werden Gas und vorzugsweise Luft als kompressibles Medium eingesetzt. Denkbar ist es aber auch, dass eine Elastomer- oder Stahlfeder oder dergleichen als Federeinrichtung eingesetzt wird.

Vorzugsweise ist die Dämpfereinrichtung in einem Dämpfergehäuse angeordnet, welches bei einer Einfederung in die Federeinrichtung eintaucht. Dann ist es besonders bevorzugt, dass wenigstens die zweite Federkammer wenigstens die erste Dämpferkammer wenigstens im eingefederten Zustand wenigstens teilweise radial umgibt. Dadurch wird ein besonders kompakter Aufbau ermöglicht.

In solchen Ausgestaltungen ist es bevorzugt, dass ein Federungskolben vorgesehen ist, der auf der Kolbenstange beweglich angeordnet ist. Der Federungskolben ist insbesondere dazu geeignet, die Durchgangsöffnung und gegebenenfalls auch den schräg auslaufenden Einlauf beim Einfedern und/oder beim Ausfedern wenigstens teilweise und vorzugsweise vollständig zu verschließen.

Vorzugsweise ist wenigstens ein Dämpfungskanal einem sich in radialer Richtung bzw. quer zur Längserstreckung der Kolbenstange erstreckenden Feld der Felderzeugungseinrichtung aussetzbar. Bei einer solchen Ausrichtung des Feldes wird der Dämpfungskanal über einer besonders langen Strecke dem Feld der Felderzeugungseinrichtung ausgesetzt, sodass eine besonders effektive Dämpfung möglich ist.

Bevorzugt ist es, dass wenigstens ein magnetisch leitender Ringleiter die Felderzeugungseinrichtung und/oder die Dämpfungskanäle radial nach außen umgibt.

In vorteilhaften Ausgestaltungen weist die Fächerwandung eine geringere Wandstärke auf als das Doppelte einer geringsten freien Erstreckung eines Dämpfungskanals quer zur Strömungsrichtung. Das bedeutet insbesondere, dass die Wandstärke der Fächerwandung geringer ist als die Höhe oder Breite eines Dämpfungskanals. Besonders bevorzugt ist die Querschnittsfläche der Fächerwandung kleiner als eine Querschnittsfläche wenigstens eines Dämpfungskanals. Vorteilhaft ist es auch, wenn die Fächerwandung eine Wandstärke aufweist, die kleiner als ein Zehntel der Länge der Fächerwandung in Strömungsrichtung beträgt. Insbesondere weist die Fächerwandung eine Wandstärke auf, die kleiner als ein Fünftel der Breite der Fächerwandung quer zur Strömungsrichtung beträgt.

Eine dünne Fächerwandung ermöglicht einen kompakten Aufbau und ein geringes Gewicht. Die Unterteilung in zwei durch eine Fächerwandung getrennte Dämpfungskanäle erlaubt eine hohe Dämpfungskraft auf kleinem Bauraum. Gerade dann ist es wichtig, dass die verschiedenen Dämpfungskanäle nicht unterschiedlichen Drücken ausgesetzt werden. Bei stark unterschiedlichen Drücken in benachbarten Dämpfungskanälen kann eine dünne Fächerwandung der Belastung nicht Stand halten und verbiegt sich oder bricht. Um solchen Belastungen Stand zu halten, müsste die Fächerwandung erheblich dicker werden, was aber den Durchtrittsquerschnitt erheblich verringern würde.

Bei diesen Ausgestaltungen wird jeweils das Verhältnis der Fläche des Dämpfungskanals zur Fläche der Fächerwandung groß gewählt, um einen möglichst großen Anteil an offener Fläche zur Verfügung zu stellen. Dies ermöglicht bei kleinem Bauraum eine besonders gute Ausnutzung desselben.

In einer anderen erfindungsgemäßen Ausgestaltung ist ein Stoßdämpfer für ein wenigstens teilweise muskelbetriebenes Fahrrad vorgesehen und weist wenigstens eine Dämpfereinrichtung auf, der eine erste und wenigstens eine zweite Dämpferkammer zugeordnet sind, welche über wenigstens ein Dämpfungsventil miteinander hydraulisch gekoppelt sind. In dem Dämpfungsventil ist wenigstens ein Dämpfungskanal mit einem feldempfindlichen rheologischen Medium vorgesehen. Dem wenigstens einen Dämpfungsventil ist wenigstens eine Felderzeugungseinrichtung zugeordnet ist, welche zur Erzeugung und Steuerung einer Feldstärke in dem Strömungskanal des Dämpfungsventils dient.

Dabei ist der Dämpfungskanal so angeordnet, dass der Dämpfungskanal in der Druckstufe und in der Zugstufe durchströmt wird. Das Dämpfungsventil umfasst für die Druckstufe und die Zugstufe getrennte Strömungsventile, womit eine Grundkurve der Dämpferkennlinie mechanisch einstellbar ist.

Ein erheblicher Vorteil eines solchen Stoßdämpfers ist, dass die Grundkennlinie an die vorgesehene Einbausituation angepasst werden kann. Unterschiedliche Rahmengeometrien und Rahmengrößen erfordern unterschiedliche Einstellungen. Grundsätzlich kann der Stoßdämpfer aber auch innerhalb seines Arbeitsbereiches elektrisch variiert werden. Eine Anpassung der Grundkennlinie an die weichste vorgesehen Dämpferkennlinie erlaubt aber ein noch weitergehenderes Energiesparen, da nur noch Änderungen gegenüber der weichsten Dämpferkennlinie elektrisch bewirkt werden müssen.

Vorzugsweise ist es möglich, den Durchflußwiderstand durch wenigstens ein z. B. austauschbares Strömungsventil zu verändern. Es ist auch möglich, den Durchflußwiderstand wenigstens eines Strömungsventils mit wenigstens einem mechanischen Einstellmittel zu verändern, um eine Grundkurve der Dämpferkennlinie einzustellen.

Besonders bevorzugt sind wenigstens ein Strömungsventil in der Druckstufe und wenigstens ein Strömungsventil in der Zugstufe mit jeweils wenigstens einem mechanischen Einstellmittel oder mit wenigstens einem austauschbaren Strömungsventil veränderbar, um die Grundkurve der Dämpferkennlinie entsprechend vorzugeben.

Vorzugsweise ist die Grundkurve nur von einem Fachmann veränderbar.

Weitere Vorteile und Eigenschaften der vorliegenden Erfindung ergeben sich aus dem Ausführungsbeispiel, das mit Bezug auf die beiliegenden Figuren im Folgenden erläutert wird.

In den Figuren zeigen:
- Fig. 1: eine schematische Ansicht eines mit einem erfindungsgemä-ßen Stoßdämpfer ausgerüsteten Fahrrads;
- Fig. 2: eine schematische Ansicht der Kommunikationsverbindungen des Fahrrads nach Fig. 1;
- Fig. 3: eine schematische geschnittene Ansicht eines Stoßdämpfers des Fahrrads nach Fig. 1 mit einer Elektronikeinheit;
- Fig. 4: eine geschnittene Seitenansicht des Stoßdämpfers nach Fig. 3 in einer vergrößerten Darstellung in der Druckstufe;
- Fig. 5: eine geschnittene vergrößerte Darstellung des Stoßdämpfers in der Zugstufe;
- Fig. 6: die Kolbeneinheit des Stoßdämpfers nach Fig. 3;
- Fig. 7: den Querschnitt A-A aus Fig. 6;
- Fig. 8: eine Prinzipskizze der fächerartigen Dämpfungskanäle; und
- Fig. 9: einen vergrößerten Querschnitt durch die Kolbeneinheit;
- Fig. 10: eine erste schematische Darstellung einer Dämpferkennlinie für den Stoßdämpfer nach Fig. 3;
- Fig. 11: eine schematische Darstellung der hydraulischen Grundkennlinie des Stoßdämpfers nach Fig. 3 und zwei verschiedene Dämpferkennlinien;
- Fig. 12: den zeitlichen Verlauf des Federweges, der Kolbengeschwindigkeit, der Dämpfungskraft und der angelegten Stromstärke für den Stoßdämpfer nach Fig. 3 bei einem Sprung; und
- Fig. 13: einen anderen Dämpferkolben für den Stoßdämpfer nach Fig. 3.

Mit Bezug auf die beiliegenden Figuren wird im Folgenden ein Ausführungsbeispiel eines mit Stoßdämpfern 100 ausgerüsteten Fahrrads 200 erläutert.

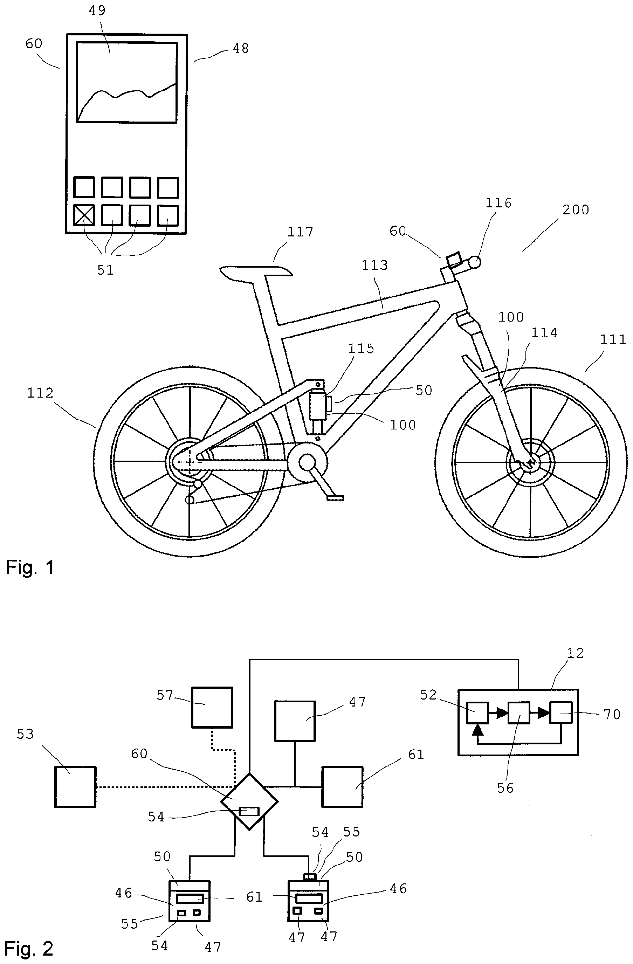

Fig. 1 zeigt eine schematische Darstellung eines Fahrrades 200, welches als Mountainbike ausgeführt ist und einen Rahmen 113 sowie ein Vorderrad 111 und ein Hinterrad 112 aufweist. Sowohl das Vorderrad 111 als auch das Hinterrad 112 sind mit Speichen ausgerüstet und können über Scheibenbremsen verfügen. Eine Gangschaltung dient zur Wahl des Übersetzungsverhältnisses. Weiterhin weist das Fahrrad 200 einen Lenker 116 und einen Sattel 117 auf.

Das Vorderrad 111 verfügt über einen als Federgabel 114 ausgeführten Stoßdämpfer 100 und an dem Hinterrad ist ein als Hinterraddämpfer 115 ausgeführter Stoßdämpfer 100 vorgesehen. Eine zentrale Steuereinrichtung 60 ist hier an dem Lenker 116 vorgesehen.

Die zentrale Steuereinrichtung 60 kann auch als Fahrwerksteuerung eingesetzt werden und sowohl die Federgabel 114 als auch den Hinterradstoßdämpfer 115 synchron steuern. Die Steuerung der Stoßdämpfer 100 und weiterer Fahrradkomponenten kann in Abhängigkeit verschiedenster Parameter erfolgen und erfolgt auch anhand von sensorischen Daten. Gegebenenfalls können auch die Feder- und/oder Dämpfungseigenschaften der Sattelstütze eingestellt werden. Es ist möglich, dass mit der zentralen Steuereinrichtung 60 auch die Schaltung zum Einstellen verschiedener Übersetzungen gesteuert werden kann.

Zusätzlich weist jeder Stoßdämpfer 100 wenigstens eine Steuereinrichtung 46 an einer austauschbar vorgesehenen Elektronikeinheit 50 auf. Die Elektronikeinheiten 50 umfassen wenigstens eine Batterieeinheit 61. Die Batterieeinheiten 61 können zusammen mit der jeweiligen Elektronikeinheit oder separat gewechselt werden. Beispielsweise können wiederaufladbare Batterieeinheiten vorgesehen sein, die zusammen mit der Elektronikeinheit 50 dem Stoßdämpfer mit einem Handgriff entnommen werden können, um die Elektronikeinheit wieder aufzuladen. Möglich ist auch eine Energieversorgung durch eine zentrale Batterieeinheit oder die Unterstützung oder der Betrieb durch einen Dynamo oder dergleichen.

Hier ist auch eine Steuereinrichtung 46 oder eine Steuereinheit in den Stoßdämpfer integriert, wobei die Steuereinheit die grundlegenden Funktionen zur Verfügung stellt. Die Bedienung erfolgt dann über die Elektronikeinheit 50 oder über die zentrale Steuereinrichtung 60. Mit der Steuereinrichtung 60 oder den Steuereinrichtungen 46 können die Dämpfungseigenschaften der Federgabel 114 und des Hinterradstoßdämpfers 115 eingestellt werden.

Die zentrale Steuereinrichtung 60 wird über eine Bedieneinrichtung 48 bedient. Es ist möglich, dass die Steuereinrichtung 60 eine Anzeigeeinrichtung 49 und/oder mehrere Bedienknöpfe 51 aufweist. Möglich ist es auch, dass die Steuereinrichtung berührungsempfindlich oder näherungssensitiv ausgeführt ist, sodass eine Bedienung durch Berührung entsprechender Schaltflächen oder dergleichen möglich ist.

Die Steuereinrichtung 60 kann dann auch als Fahrradcomputer dienen und Informationen über die aktuelle Geschwindigkeit, sowie über die Durchschnittsgeschwindigkeit und/oder die Tages-, Tour-, Runden- und Gesamtkilometer anzeigen. Möglich ist auch die Anzeige der aktuellen Position, der momentanen Höhe oder der gefahrenen Strecke sowie des Streckenprofils.

Fig. 2 zeigt eine schematische Darstellung der Kommunikationsverbindungen der beteiligten Komponenten. Die zentrale Steuereinrichtung 60 kann drahtgebunden oder drahtlos mit den einzelnen Komponenten verbunden sein, beispielsweise über WLAN, Bluetooth, ANT+, GPRS, UMTS, LTE oder sonstige Übertragungsstandards. Die gepunktet dargestellte Verbindung mit dem Internet 53 ist eine drahtlose Verbindung. Die Steuereinrichtung 60 kann mit der Batterieeinheit 61 verbunden sein oder eine eigene Energieversorgung aufweisen. Weiterhin kann die Steuereinrichtung 60 mit einem Sensor 47 oder mit mehreren Sensoren 47 verbunden sein. Die grafische Bedieneinheit 57 bzw. Anzeigeeinheit kann auch drahtlos mit der Steuereinheit 60 verbunden sein. Drahtlos oder drahtgebunden kann der Stoßdämpfer 100 der Federgabel 114 oder der Stoßdämpfer 100 des Hinterraddämpfers 115 angeschlossen sein. Die Verbindung erfolgt über eine Netzwerkschnittstelle 54, die als Funknetzschnittstelle 55 oder als Kabelanschluss 56 ausgeführt sein kann.

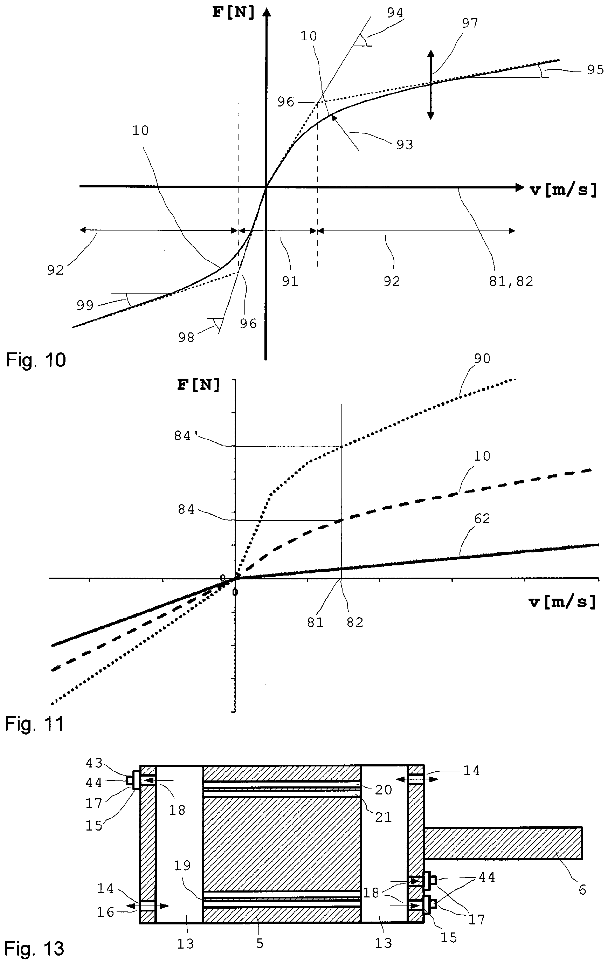

In Fig. 2 ist der Steuerkeislauf 12 schematisch dargestellt, der in der Speichereinrichtung abgelegt und in der Steuereinrichtung 60 bzw. den Steuereinrichtungen 46 hinterlegt oder einprogrammiert ist. Der Steuerkreislauf 12 wird im Betrieb periodisch und insbesondere kontinuierlich periodisch durchgeführt. Im Schritt 52 wird z. B. mit den Sensoren 47 eine aktuelle Relativbewegung bzw. aktuelle Relativgeschwindigkeit der ersten Komponente zu der zweiten Komponente erfasst. Aus den Werten des Sensors 47 oder der Sensoren wird im Schritt 52 ein Kennwert abgeleitet, der repräsentativ für die aktuelle Relativgeschwindigkeit ist. Im Schritt 56 wird dann anschließend aus dem ermittelten Kennwert 81 (vgl. Fig. 10, 11) unter Berücksichtigung der vorbestimmten oder ausgewählten Dämpferkennlinie die zugehörige einzustellende Dämpfungskraft abgeleitet. Daraus wird ein Maß für die aktuell einzustellende Feldstärke abgeleitet, mit welcher die einzustellende Dämpfungskraft wenigstens näherungsweise erreicht wird. Das Maß kann die Feldstärke selbst sein oder aber die Stromstärke angeben, mit welcher die einzustellende Dämpfungskraft wenigstens etwa erreicht wird. Im darauf folgenden Schritt 70 wird die aktuell einzustellende Feldstärke erzeugt oder die entsprechende Stromstärke an die elektrische Spuleneinrichtung als Felderzeugungseinrichtung angelegt, sodass innerhalb eines einzigen Zyklus des Steuerkreislaufes 12 die Dämpfungskraft erzeugt wird, die bei der gewählten oder vorbestimmten Dämpferkennlinie zu der aktuellen Relativgeschwindigkeit der ersten Komponente zu der zweiten Komponente entspricht. Anschließend startet der nächste Zyklus und es wird wieder Schritt 52 durchgeführt.

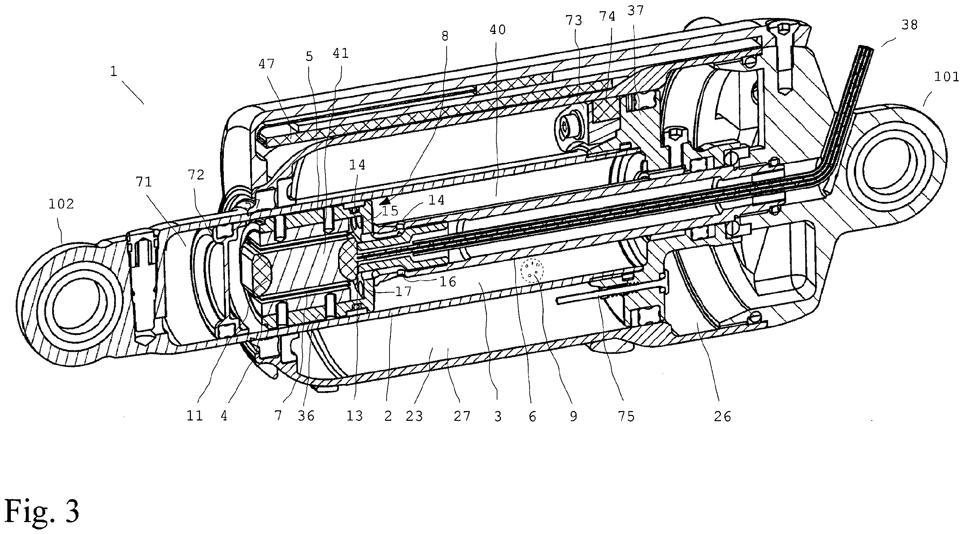

Fig. 3 zeigt in einer stark schematischen Ansicht einen Querschnitt eines Stoßdämpfer 100, der hier beispielsweise in dem Hinterraddämpfer 115 Anwendung findet.

Der Stoßdämpfer 100 umfasst eine Dämpfereinrichtung 1. Der Stoßdämpfer 100 wird mit dem ersten Ende als Komponente 101 und dem zweiten Ende als Komponente 102 an unterschiedlichen Teilen des Rahmens befestigt, um Relativbewegungen zu dämpfen.

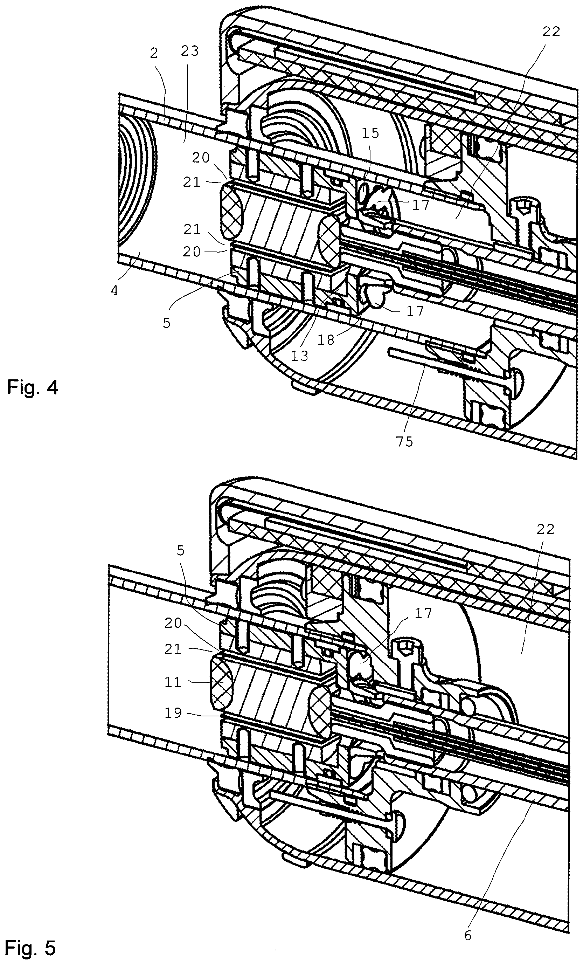

In dem Dämpfergehäuse 2 ist eine Dämpfungskolbeneinheit 40 vorgesehen, die einen Dämpfungskolben 5 als Dämpfungsventil 8 und eine damit verbundene Kolbenstange 6 umfasst. In dem Dämpfungskolben 5 ist das Dämpfungsventil 8 vorgesehen, welches hier eine Felderzeugungseinrichtung 11 und insbesondere eine elektrische Spule umfasst, um eine entsprechende Feldstärke zu erzeugen. Die Magnetfeldlinien verlaufen dabei in dem Zentralbereich des Kerns 41 etwa senkrecht zur Längserstreckung der Kolbenstange 6 und durchtreten somit etwa senkrecht die Dämpfungskanäle 20, 21 (vgl. Fig. 4). Dadurch wird eine effektive Beeinflussung des sich in den Dämpfungskanälen 20 und 21 befindenden magnetorheologischen Fluides bewirkt, sodass der Durchfluss durch das Dämpfungsventil 8 effektiv gedämpft werden kann. Der Stoßdämpfer 100 umfasst eine erste Dämpferkammer 3 und eine zweite Dämpferkammer 4, die durch das als Kolben 5 ausgebildete Dämpfungsventil 8 voneinander getrennt sind. In anderen Ausgestaltungen ist auch ein externes Dämpferventil 8 möglich, welches außerhalb des Dämpfergehäuses 2 angeordnet und über entsprechende Zuleitungen angeschlossen ist.

Zu dem Ende 102 hin schließt sich an die erste Dämpferkammer 4 der Ausgleichskolben 72 und danach der Ausgleichsraum 71 an. Der Ausgleichsraum 71 ist vorzugsweise mit einem Gas gefüllt und dient zum Ausgleich des Kolbenstangenvolumens, welches beim Einfedern in das ganze Dämpfergehäuse 2 eintritt.

Nicht nur in dem Dämpfungsventil 8, sondern hier in den beiden Dämpfungskammern 3 und 4 insgesamt befindet sich magnetorheologisches Fluid 9 als feldempfindliches Medium.

Der Strömungskanal 7 zwischen der ersten Dämpferkammer 3 und der zweiten Dämpferkammer 4 erstreckt sich ausgehend von der zweiten Dämpferkammer 4 zunächst durch die fächerartigen Dämpfungskanäle 20 und 21, die am anderen Ende in den Sammelraum 13 bzw. in die Sammelräume 13 münden. Dort sammelt sich nach dem Austritt aus den Dämpfungskanälen 20, 21 das magnetorheologische Fluid, bevor es durch die Strömungsöffnungen 14, 15 in die erste Dämpfungskammer 3 übertritt. Beim Einfedern, also in der Druckstufe, werden hier sämtliche Strömungsöffnungen 14, 15 durchströmt. Das bedeutet, dass der Hauptteil der Strömung hier durch die Strömungsöffnungen 15 durchtritt und die Einwegventile 17 an den Strömungsöffnungen 15 automatisch öffnen, sodass das magnetorheologische Fluid aus der zweiten Dämpferkammer 4 in die erste Dämpferkammer 3 übertreten kann.

Im dargestellten eingefederten Zustand ist die erste Dämpferkammer 3 vollständig radial von der zweiten Federkammer 27 der Federeinrichtung 26 umgeben. Dadurch wird ein besonders kompakter Aufbau ermöglicht.

Ein mit einer Feder beaufschlagter Stößel 75 sorgt bei vollständigem Ausfedern des Stoßdämpfers 100 für einen Druckausgleich zwischen der ersten Federkammer 26 und der zweiten Federkammer 27.

Der Federungskolben 37 ist am Ende des Dämpfergehäuses 2 vorgesehen. Daran angeordnet ist ein Halter 73, der einen Magneten 74 hält. Der Magnet 74 ist Teil eines Sensors 47. Der Sensor 47 umfasst ein Magnetpotentiometer, welches ein Signal erfasst, welches für die Position des Magneten 74 und damit des Federungskolbens repräsentativ ist. Eine solches Potentiometer 47 erlaubt nicht nur die Bestimmung eines relativen Ortes, sondern erlaubt hier auch die absolute Feststellung des Ein- bzw. Ausfederungsstandes des Stoßdämpfers 100.

Fig. 4 und 5 zeigen partiell vergrößerte Details der Darstellung gemäß Fig. 3, wobei in Fig. 4 der Druckstufenfall und in Fig. 5 der Zugstufenfall dargestellt ist.

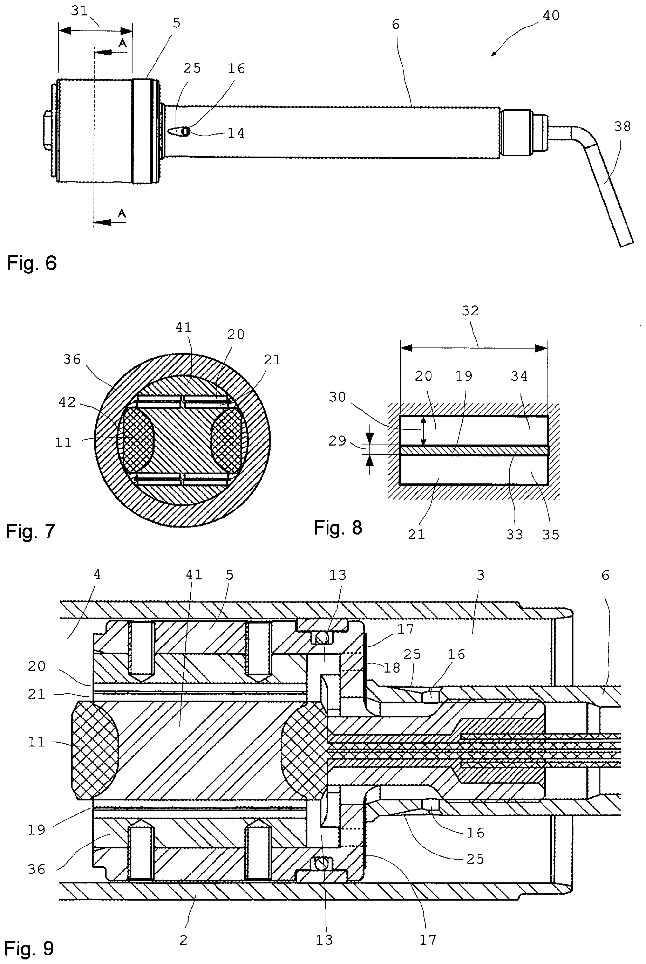

In dem in Fig. 4 dargestellten Druckstufenfall, also beim Einfedern, tritt aus der zweiten Dämpferkammer 4 das magnetorheologische Fluid 9 durch die Dämpfungskanäle 20, 21 in den Dämpfungskolben 5 ein. Der Durchflusswiderstand durch die Dämpfungskanäle 20, 21 hängt von dem Magnetfeld der als Spule ausgeführten Felderzeugungseinrichtung 11 ab. Nach dem Verlassen der Dämpfungskanäle 20, 21 sammelt sich das magnetorheologische Fluid in den beiden Sammelräumen 13 (vgl. Fig. 9 und 13) und tritt anschließend durch die im Druckstufenfall durchlässigen Strömungsöffnungen 15 mit den Einwegventilen 17 hindurch.

In dem in Fig. 5 dargestellten Zugstufenfall strömt das magnetorheologische Fluid von der einen Seite 22, der Seite der Kolbenstange 6, auf den Dämpfungskolben 5 zu. Die Einwegventile 17 an den Strömungsöffnungen 15 schließen automatisch, sodass nur noch die als Durchgangsöffnungen 16 ausgeführten Strömungsöffnungen 14 in der Kolbenstange 6 übrig bleiben, um das magnetorheologische Fluid in den Dämpfungskolben 5 hineinzubringen. Nachdem das magnetorheologische Fluid 9 durch die Durchgangsöffnung 16 in dem Sammelraum 13 bzw. in die Sammelräume 13 eingetreten ist, werden alle fächerartigen Dämpfungskanäle 20, 21 gleichmäßig durch das magnetorheologische Fluid durchströmt, bis das magnetorheologische Fluid an der anderen Strömungsseite 23 aus dem Dämpfungskolben 5 austritt. Klar erkennbar ist in Fig. 5 auch, dass der Dämpfungskolben 5 eine Spule als Felderzeugungseinrichtung 11, einen Kern 41 aus gut magnetisch leitendem Material und einen Ringleiter 36 umfasst. Weiterhin kann ein Isoliermaterial 42 vorgesehen sein.

Durch den Sammelraum 13 wird eine effektive Reihenschaltung der insbesondere als Shim-Ventile ausgeführten Einwegventile 17 mit den Dämpfungskanälen 20, 21 ermöglicht. Durch den Sammelraum 13 wird eine insbesondere unzulässig hohe Belastung der Fächerwandungen 19 durch unterschiedliche Drücke in den Dämpferkanälen 20, 21 vermieden. Dabei können Betriebsdrücke von 30 bar, 50 bar und mehr auftreten, die bei unterschiedlicher Belastung auf beiden Seiten einer Fächerwandung 19 zur Zerstörung der dünnen Fächerwandung 19 führen können.

Fig. 6 zeigt eine Seitenansicht der Dämpfungskolbeneinheit 40 mit dem Dämpfungskolben 5 und der Kolbenstange 6, aus der am Ende das Kabel 38 hervorragt. Die Länge 31 der Dämpfungskanäle 20, 21 ist beispielhaft angezogen. Klar erkennbar ist in dieser Darstellung die als Durchgangsöffnung 16 ausgebildete Strömungsöffnung 14 mit dem sich daran anschließenden schräg zulaufenden Einlauf 25, der für eine selbsttätig zunehmende Endlagendämpfung sorgt. Federt der Stoßdämpfer 100 fast vollständig aus, so schiebt sich der Federungskolben 37 zunächst über die Strömungsöffnung 16 und anschließend über den Einlauf 25, sodass der Durchflussquerschnitt immer weiter abnimmt und somit die Dämpfungskraft automatisch erhöht wird.

Fig. 7 zeigt den Querschnitt A-A aus Fig. 6. Der Kern 41 ist von der als Spule ausgeführten Felderzeugungseinrichtung 11 umgeben. In dem Kern sind Dämpfungskanäle 20 und 21 angeordnet. Radial umgeben werden der Kern und die Spule durch Ringleiter 36.

Fig. 8 zeigt eine vergrößerte Darstellung der Dämpfungskanäle 20, 21, die in dem Kern 41 vorgesehen sind. Die fächerartigen Dämpfungskanäle 20, 21 werden durch eine Fächerwandung 19 voneinander getrennt. Dabei beträgt eine Wandstärke 29 der Fächerwandung 19 weniger als eine Höhe 30 eines Dämpfungskanals 20 bzw. 21. Auch die Querschnittsfläche 33 der Fächerwandung 19 ist erheblich kleiner als die Querschnittsfläche 34 bzw. 35 der Dämpfungskanäle 20 bzw. 21. Im dargestellten Beispiel liegt die Wandstärke 29 der Fächerwandung 19 bei etwa 0,3 bis 0,6 mm. Die lichte Höhe 30 des Dämpfungskanals 20 bzw. 21 ist mit 0,5 mm bis 0,9 mm größer.

Typische Werte für Dämpfungskanäle 20, 21 eines Hinterraddämpfers 115 sind, ohne jedoch darauf beschränkt zu sein, Kanallängen 31 zwischen etwa 10 und 30 mm, Kanalbreiten zwischen etwa 5 und 20 mm und Kanalhöhen zwischen etwa 0,2 und 1,5mm. Dabei können bis zu zehn Dämpfungskanäle 20, 21 vorhanden sein, die wiederum in einer oder mehreren Gruppen zusammengefasst sein können. Innerhalb einer solchen Gruppe sind die Dämpfungskanäle 20, 21 durch Fächerwandungen 19 voneinander getrennt, die typische Wandstärken zwischen 0,2 und 1 mm haben.

Der freie Strömungsquerschnitt als Summe aller Dämpfungskanäle 20, 21 ist stark abhängig von der Kanalform, dem verwendeten Fluid, der Kolbenfläche und dem gewünschten Kraftbereich. Typischerweise liegt der freie Strömungsquerschnitt im Bereich zwischen 10 und 200 Quadratmillimeter.

Fig. 10 zeigt eine Dämpferkennlinie 10 des Stoßdämpfers 100 nach Fig. 3 mit dem Dämpfungsventil 8 in einem Kraft-Geschwindigkeits-Diagramm. Der Low-Speed-Bereich 91 und der High-Speed-Bereich 92 sind über eine sanfte Abrundung mit einem Radius 93 verbunden. Die Dämpferkennlinie 10 ist hier unsymmetrisch aufgebaut. Die Dämpferkennlinie 10 zeigt zwar grundsätzlich ähnliche Verläufe für die Druck- und die Zugstufe, aber die Steigung ist in der Zugstufe steiler vorgegeben als in der Druckstufe.

Die Dämpferkennlinie 10 wird jederzeit in Echtzeit elektrisch unter Berücksichtigung der hydraulischen Grunddämpfung eingestellt, sodass bei jedem Stoß bzw. Ereignis oder jeder Störung 85 noch während des Stoßes 85 oder der Störung selbst eine entsprechende Dämpfungskraft eingestellt wird.

Die Steigung 94 der Dämpferkennlinie 10 im Low-Speed-Bereich 91 kann sowohl für die Druckstufe als für die Zugstufe jeweils durch eine Gerade mit im Wesentlichen linearer Steigung 94 bzw. 98 gut angenähert werden. Die vorgegebene Dämpferkennlinie 10 verläuft durch den Koordinatenursprung, sodass bei einer Relativgeschwindigkeit des Dämpferkolbens 5 von null auch keine Dämpfungskraft vorliegt. Das ermöglicht ein sehr weiches und angenehmes Ansprechverhalten.

Auch im High-Speed-Bereich 92 sind die Steigungen 95 bzw. 99 hier im Wesentlichen linear vorgegeben. Dazwischen kann sich jeweils ein gekrümmter Zwischenabschnitt 93 erstrecken, um Knickpunkte 96 zu vermeiden. Es kann auch oder ein linearer Zwischenabschnitt 93 oder es können mehrere lineare oder leicht gekrümmte Zwischenabschnitte 93 vorgesehen sein, um einen gekrümmten Verlauf anzunähern.

Eingezeichnet ist weiterhin ein Pfeil 97, der die Auswirkung eines unterschiedlich starken Magnetfeldes anzeigt. Mit einem stärkeren Magnetfeld verschiebt sich die Dämpferkennlinie nach oben, während sie sich bei einem schwächeren Magnetfeld nach unten verschiebt.

Punktiert eingezeichnet ist eine Dämpferkennlinie, bei der kein Zwischenabschnitt 93 vorgesehen ist, sodass sich an den Punkten 96 mehr oder weniger stark ausgeprägte Knickpunkte ergeben.

Die Steigungen 94 und 98 im Low-Speed-Bereich 91 und die Steigungen 95 und 99 in den High-Speed-Bereichen 92 sind wie auch die gesamte Dämpferkennlinie 10 änderbar und an die aktuellen Wünsche und Bedingungen anpassbar. Dadurch kann bei Erkennung eines entsprechend veränderten Untergrundes eine andere Dämpferkennlinie automatisch gewählt werden, die eine weichere oder aber härtere Dämpfung vorgibt. Unabhängig von der gewählten Dämpferkennlinie wird jederzeit jeder Stoß in Echtzeit gedämpft.

Die Steigungen 95 und 99 im jeweiligen High-Speed-Bereich 92 werden ebenfalls vorgegeben und sind bei Bedarf veränderbar. Die Stromversorgung für die Steuereinrichtung und die elektrische Spule als Felderzeugungseinrichtung 11 kann durch eine Batterie, einen Akku, einen Generator, Dynamo oder insbesondere auch einen Nabendynamo erfolgen.

Fig. 11 stellt die Grundkennlinie 62 und zwei unterschiedliche Dämpferkennlinien 10 und 90 dar. Aufgetragen ist jeweils die Dämpfungskraft über der Relativgeschwindigkeit der Komponenten 101 und 102 zueinander.

Die Grundkennlinie 62 stellt die hydraulischen Eigenschaften des Stoßdämpfers 100 ohne Anlegen eines Magnetfeldes dar. Durch die Einwegventile 17 unterscheidet sich die Steigung der Grundkennlinie in der Druckstufe und in der Zugstufe und ist in der Zugstufe steiler als in der Druckstufe.

Die Dämpferkennlinien 10 und 90 sind in Fig. 11 unsymmetrisch aufgebaut. Die Dämpferkennlinien 10 und 90 stellen die resultierenden Dämpfungskräfte über der Relativgeschwindigkeit dar und setzen sich jeweils aus der Dämpfungskraft der Grundkennlinie 62 und der magnetisch erzeugten Dämpfungskraft zusammen. Das bedeutet, dass jeweils eine geringere Dämpfungskraft als die Dämpfungskraft der Grundkennlinie 62 bei einer bestimmten Ein- oder Ausfedergeschwindigkeit nicht einstellbar ist. Die Grundkennlinie 62 muss bei der Auslegung berücksichtigt werden. Eine geringere Dämpfung ist prinzipbedingt nicht möglich. Andererseits wird bei einer besonders geringen Differenz zwischen einer Dämpferkennlinie 10 und der Grundkennlinie 62 besonders wenig elektrische Energie benötigt, sodass eine gewisse Anpassung der Grundkennlinie 62 an die weichste vorgesehene Dämpferkennlinie sinnvoll ist. Die weichste vorgesehene Dämpferkennlinie kann z. B. die Dämpferkennlinie 10 sein.

Eine Grundkennlinie 62 mit "brauchbaren" Eigenschaften stellt vernünftige Notlaufeigenschaften sicher, falls die Stromversorgung nicht mehr ausreichend Energie bereitstellen kann. Möglich und bevorzugt ist auch ein mechanisch einstellbares Notventil, um einstellbare Notlaufeigenschaften zur Verfügung zu stellen.

Die Steigung ist in der Druckstufe und der Zugstufe jeweils unterschiedlich. In der Zugstufe ist die Steigung 96 hier insgesamt etwa linear. Eine Unterscheidung zwischen Low-Speed-Bereich 91 und High-Speed-Bereich 92 findet in der Zugstufe hier praktisch nicht statt.

In der Druckstufe hingegen weisen der Low-Speed-Bereich 91 und der High-Speed-Bereich 92 bei beiden eingezeichneten Dämpferkennlinien 10 und 90 hier jeweils unterschiedliche Steigungen 94 bzw. 95 auf.

Der Sensor 47 wird durch die Steuereinrichtung 46 in kurzen äquidistanten Zeitabständen von z. B. 1 ms, 2 ms oder 5 ms periodisch abgefragt. Die Steuereinrichtung 46 berechnet aus den Signalen einen Kennwert 81 für die Relativgeschwindigkeit 82. Möglich ist es, dass die Steuereinrichtung aus den Sensorsignalen eine Relativgeschwindigkeit 82 ermittelt, die als Kennwert 81 verwendet werden kann. Im einfachsten Falle ermittelt der Sensor 47 dazu direkt eine Relativgeschwindigkeit. In einem anderen einfachen Fall ermittelt der Sensor 47 oder die Steuereinrichtung 46 aus den Sensorsignalen eine Weg- oder Positionsänderung der Komponenten 101 und 102 zueinander. Wenn der Zeitabstand zweier Messungen bekannt ist, können daraus eine Relativgeschwindigkeit 82 und somit ein Kennwert 81 abgeleitet werden. Bei im Wesentlichen konstantem Zeitabstand zwischen zwei Messungen kann auch eine Positionsänderung bzw. Relativbewegung direkt als Kennwert 81 verwendet werden.

Möglich ist es auch, aus Werten von Beschleunigungssensoren oder aus einem Parameterset mehrerer unterschiedlicher Sensorwerte einen Kennwert 81 zu ermitteln, der repräsentativ für die aktuelle Relativgeschwindigkeit 82 ist. Eine Ausführung sieht vor die Daten von Beschleunigungssensoren und/oder Wegsensoren derart zu koppeln, dass einerseits auf schnelle Veränderungen durch Sprünge oder Unebenheiten der Fahrbahn schnell reagiert werden kann und dass andererseits eine exakte Positions- und Geschwindigkeitsbestimmung bei langsameren Vorgängen erreicht wird.

Mit dem so ermittelten Kennwert 81 wird mithilfe der in einer Speichereinrichtung abgelegten Dämpferkennlinie 10 oder z. B. 90 die dazugehörige Dämpfungskraft 84 bzw. 84' ermittelt. Das dazugehörige Magnetfeld und die zugehörige Stromstärke der Spule 11 werden abgeleitet und in Echtzeit eingestellt. Das bedeutet, dass ein Zyklus innerhalb 20 ms und in der Regel auch innerhalb von 10 ms abläuft. Die Messung kann häufiger erfolgen, z. B. in Zeitabständen von 5 ms oder sogar in Zeitabständen von 1 oder 2 ms oder noch schneller. Die Steuerungseinrichtung verarbeitet die aufgenommenen Sensorsignale und erzeugt mit der Spule 11 ein Magnetfeld entsprechender Feldstärke, um die zu dem Kennwert 81 zugehörige Dämpfungskraft zu erzeugen. Innerhalb der vorgesehenen Zykluszeit von z. B. 10 ms wirkt das Magnetfeld und stellt die gewünschte Dämpfungskraft 84 ein.

Wenn sich nach einer weiteren Messperiode die Relativgeschwindigkeit 82 geändert hat, wird ein dementsprechend anderes Magnetfeld erzeugt, sodass der Regelkreislauf aus Sensor 47, Steuereinrichtung 46 und Dämpfungsventil 8 als Aktor die gewünschte Reaktionszeit einhält und in Echtzeit das System anpasst.

Messungen haben ergeben, dass bei Fahrraddämpfern Reaktions- und Zyluszeiten von 10 oder 20 ms vollkommen ausreichend sind, um in Echtzeit die Dämpfung einzustellen.

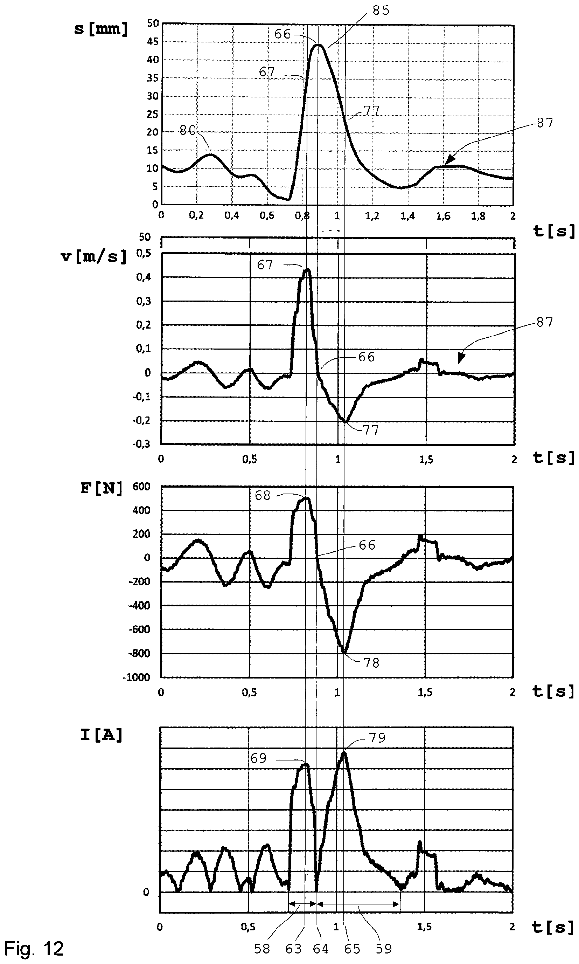

Das zeigen auch Daten eines tatsächlich gemessenen und gedämpften Sprunges, die in Fig. 12 abgebildet sind.

Fig. 12 zeigt übereinander in separaten Diagrammen über der Zeit die während eines mit einem Fahrrad ausgeführten Sprunges die Mess- und Steuerdaten.

In dem obersten Diagramm ist der Federweg in Millimetern über der Zeit in Sekunden abgebildet, wobei die Zeitskala insgesamt nur 2 Sekunden wiedergibt. Darunter sind in entsprechender Art und Weise die Relativgeschwindigkeit, die Dämpfungskraft und die Stromstärke über demselben Zeitintervall abgebildet.

Zu Beginn befindet sich der Stoßdämpfer 100 innerhalb der SAG-Position und ist etwa 12 mm eingefedert. Während des Sprunges als Ereignis 85 federt der Stoßdämpfer 100 aus, sodass der Dämpfungskolben 5 bei etwa 0,75 Sekunden nahezu vollständig ausgefedert ist.

Nach dem Aufsetzen auf dem Boden beginnt das Hinterrad einzufedern und erreicht eine maximale Einfeder- und somit Relativgeschwindigkeit 67 in der Druckstufe, die bei etwa 0,8 Sekunden auftritt und hier Werte oberhalb von 0,4 m/s erreicht. Zur gleichen Zeit wird auch die maximale Dämpfungskraft 68 von hier etwa 500 N mit dem Maximum der Stromstärke 69 in der Druckstufe erzeugt.

Sehr kurze Zeit später wird zum Zeitpunkt 64 die maximale Einfederung 66 erreicht, bei der die Relativgeschwindigkeit 67 null erreicht. Dementsprechend reduziert die Steuereinrichtung die Stromstärke auf null, sodass die Dämpfungskraft null beträgt.

Danach folgt die Zugstufendämpfung, während der Stoßdämpfer 100 wieder ausfedert. Gleichzeitig wird die Stromstärke entsprechend erhöht, um eine bei der eingestellten Dämpferkennlinie der Relativgeschwindigkeit 67 entsprechende Dämpfungskraft einzustellen.

Zum Zeitpunkt 65 ergibt sich die maximale Relativgeschwindigkeit 77 in der Zugstufe, die hier zu einer maximalen Stromstärke 79 zur Erzeugung einer maximalen Dämpfungskraft 78 von etwa 600 N führt.

Die Zeitdauer des Sprunges ergibt sich aus der Zeitdauer 58 der Druckstufe von ca. 0,2 Sekunden und der Zeitdauer 59 der Zugstufe von etwa 0,5 Sekunden zuzüglich der vorhergehenden Ausfederphase.

Aus den genanten Zeiträumen ergibt sich direkt, dass eine Regelgeschwindigkeit von 250 ms nicht ausreichend ist. Um echtzeitfähig zu sein, muss das System innerhalb von wenigstens 50 ms und besser innerhalb von 20 ms reagieren, was hier gewährleistet wird.

Die Regelgeschwindigkeit inkl. Erfassung eines Sensorsignals, Ableitung eines Kennwerts, Einstellung der Stromstärke und Einstellung der Dämpfungskraft 84 beträgt hier weniger als 10 ms. Somit wird innerhalb des in Fig. 12 abgebildeten Zeitraumes der Steuerkreislauf 12 bzw. die Regelschleife etwa 200 mal durchlaufen.

Fig. 13 zeigt einen anderen Dämpferkolben 5 für den Stoßdämpfer 100 nach Fig. 3. Dabei ist an jedem Ende des Dämpferkolbens 5 jeweils wenigstens ein Sammelraum 13 vorgesehen. Das ermöglicht es, an jedem Ende des Dämpferkolbens zusätzliche Strömungsöffnungen 14 als Strömungsventile 43 vorzusehen, die in Reihe mit einem Dämpfungskanal 20 vorgesehen sind. Möglich ist es auch, dass zwei oder mehr Dämpfungskanäle 20 und 21 vorgesehen sind.

Dadurch, dass der wenigstens ein Dämpfungskanal 20 zwischen mechanischen Strömungsöffnungen 14 oder mechanischen Strömungsventilen 43 vorgesehen ist, kann die Dämpfungskraft in der Druckstufe und in der Zugstufe unterschiedlich gewählt werden. Die Strömungsöffnungen 14 können teilweise als Durchgangsöffnungen 16 und teilweise als Einwegventil 17 ausgebildet sein. Dadurch kann in jede Strömungsrichtung unabhängig voneinander eine unterschiedliche Dämpfungskraft der Grundkennlinie 62 vorgegeben werden.

Die insbesondere als Einwegventile 17 ausgebildeten Strömungsventile 43 können über Einstellmittel 44 wie z. B. Schrauben oder Drehelemente einstellbar sein, um den Durchflusswiderstand richtungsabhängig einzustellen. Beispielsweise kann an jedem Ende ein Drehring als Einstellmittel 44 vorgesehen sein, der je nach Drehwinkel eine, zwei oder mehr der über dem Umfang vorgesehenen Strömungsöffnungen teilweise oder ganz verschließt, sodass der in die eine oder andere Strömungsrichtung 22 oder 23 zur Verfügung stehende maximale Strömungsquerschnitt jeweils entsprechend einstellbar ist.

Dadurch ist die Grundkennlinie 62 des Stoßdämpfers 100 in der Zugstufe und in der Druckstufe beliebig anpassbar. Beispielsweise kann eine Anpassung der Grundkennlinie 62 des Stoßdämpfers 100 an den Rahmentyp vorgesehen sein. Abhängig von der Rahmengeometrie und der Rahmengröße und der Einbaulage kann eine Vorjustage erfolgen, sodass eine Grundanpassung der Grundkennlinie 62 an die Einbaubedingungen erfolgen kann.

Die Grundkennlinie 62 wird dann vorzugsweise für die vorgesehene Einbausituation so eingestellt, dass sie etwa der Dämpferkennlinie 10 mit der weichsten vorgesehen Dämpfung entspricht. Wenn nur eine weiche Dämpfung gewünscht oder eingestellt wird, so wird überhaupt keine elektrische Energie benötigt. Die elektrische Spule muss nur zu den Zeitpunkten mit Strom beaufschlagt werden, wenn eine stärkere Dämpfung benötigt wird. Durch diese Maßnahme kann der Strombedarf nochmals erheblich gesenkt werden.

In allen Betriebsarten des Stoßdämpfers 100 wird vorzugsweise als Sensoreinrichtung 47 wenigstens ein Wegsensor eingesetzt. Die Sensoreinrichtung 47 wird z. B. vorzugsweise mit einer Frequenz von 2 kHz und einer Auflösung von 12 Bit ausgelesen. Theoretisch kann so bei einem Hub eines Hinterraddämpfers 115 von 50 mm alle 0,5 ms die Relativbewegung auf 12 µm genau bestimmt werden. Eine Federgabel 114 weist im Unterschied dazu z. B. einen Hub von 150 mm auf, wodurch sich bei gleichen Bedingungen eine Relativbewegung auf 36 µm genau bestimmt werden kann.

Die mit der Sensoreinrichtung 47 erfassten Daten durchlaufen vorzugsweise einen Tiefpass-Filter und werden zur Berechnung der Geschwindigkeit verwendet, wobei anhand der momentanen Geschwindigkeit, Richtung und der voreingestellten Dämpferkennlinie eine bestimmte Dämpfungskraft berechnet wird. Dieser Berechnungsvorgang wird z. B. mit 500 Hz wiederholt, sodass alle 2 ms eine neue Kraftvorgabe generiert wird. Aus der Dämpfungskraft wird über den bekannten Zusammenhang von Dämpfungskraft und dazu nötiger Feldstärke und wiederum dazu nötiger Stromstärke ein einzustellender Strom ermittelt. Insbesondere stellt ein eigener Stromregler anhand dieser Kraftvorgabe den entsprechenden Strom an der elektrischen Spuleneinrichtung am Stoßdämpfer ein, sodass die resultierende Dämpfungskraft ausreichend schnell nachgeführt wird und im Wesentlichen der Vorgabe entspricht.

Die Umwandlung einer analog gemessenen Relativbewegung in ein digitales Signal und die anschließende Berechnung der Stromvorgabe bzw. des einzustellenden Stroms benötigt kaum Ressourcen und ist mit einem Mikrocontroller nach dem Stand der Technik in wenigen Mikrosekunden möglich. Der Stromregler sorgt für ein ausreichend schnelles Ansprechen der elektrischen Spuleneinrichtung, sodass trotz Induktivität und Wirbelströmen ein Stromsprung von 0 auf 100% in wenigen Millisekunden möglich ist.

Vorteilhaft für das Ansprechverhalten des Stromreglers sind der Tiefpass-Filter und die Berechnung der Relativgeschwindigkeit, wobei hier ein Kompromiss aus schnellem Ansprechen und Filterwirkung gefunden werden muss. Die Filterparameter können auch dynamisch an die jeweilige Situation angepasst werden.

Bei entsprechend schneller Filterung wird im ungünstigsten Falle eine Relativbewegung bzw. eine Positionsänderung beim nächsten Reglertakt nach 2 ms erkannt und wird dann innerhalb von wenigen Mikrosekunden verarbeitet. Der Stromregler wird praktisch sofort daran arbeiten, die neue Stromvorgabe umzusetzen. Die Dämpfungskraft wirkt etwas verzögert nach der Stromvorgabe. Die Ansprechzeit des magnetorheologischen Fluids (MRF) beträgt kleiner als 1 ms. Die Steifigkeit des Systems spielt auch eine geringe Rolle. Abhängig vom konkreten Aufbau wird der neue Sollwert der Dämpfungskraft innerhalb von wenigen Millisekunden erreicht. Sprungantwortzeiten von weniger als 10ms sind mit dem System einfach machbar und wurden schon erfolgreich nachgewiesen. Je nach Anforderungen und verfügbaren Herstellkosten sind auch schnellere Komponenten einsetzbar, welche Sprungantwortzeiten im Bereich von einstelligen Millisekunden ermöglichen.

Die Regelung kann auch auf Fuzzy Logik aufgebaut und/oder lernfähig sein.

Es können auch zwei oder mehrere Dämpfer elektrisch zu einem Gesamtsystem verknüpft werden. Hierbei werden z. B. relevante Daten vom einem ersten Dämpfer an einen zweiten Dämpfer in Echtzeit weitergegeben, wodurch sich dieser besser auf das Ereignis einstellen kann. Als Beispiel kann der Dämpfer in der Federgabel die Informationen an den Hinterraddämpfer weitergeben, wodurch sich dieser z. B. auf einen starken Schlag voreinstellen kann. Das Gesamtsystem wird so effektiver. Es ist auch/oder eine hydraulische Verknüpfung von zwei oder mehreren Dämpfern möglich (offenes oder geschlossenes hydraulisches System).

Die Dämpfereinrichtung kann zwei oder mehrere steuerbare Dämpfungsventile mit einer (oder mehreren) Felderzeugungseinrichtung umfassen. Diese können auch außerhalb der sich relativ zueinander beweglichen Komponenten angebracht sein. Möglich ist es auch, dass wenigstens ein Permanentmagnet vorgesehen, der ein statisches Magnetfeld erzeugt. Die Stärke des effektiv in dem Dämpfungsventil wirkenden Magnetfeldes kann dann durch das von der elektrischen Spule als Felderzeugungseinrichtung erzeugte Magnetfeld in Echtzeit moduliert werden.

Insgesamt stellt die Erfindung einen vorteilhaften Stoßdämpfer zur Verfügung, welcher sowohl als Hinterradstoßdämpfer als auch in einer Federgabel Anwendung finden kann. Es wird auf einfache Art und Weise eine unterschiedliche Grunddämpfung in der Druck- und/oder Zugstufe ermöglicht. Die Unterschiedlichkeit hängt von der Orientierung der Einwegventile in den Strömungsöffnungen ab. Dadurch kann eine flexible und weitgehende Anpassung an unterschiedlichste Bedürfnisse gewährleistet werden. Die Steuerung erfolgt in Echtzeit, sodass auf alle auftretenden Ereignisse, Störungen, Stöße oder Hindernisse sofort und unmittelbar reagiert wird.

**Bezugszeichenliste:**

| | | | |
|---|---|---|---|
| 1 | Dämpfereinrichtung | 37 | Federungskolben |
| 2 | Dämpfergehäuse | 38 | Kabel |
| 3 | erste Dämpferkammer | 39 | Endlage |
| 4 | zweite Dämpferkammer | 40 | Dämpfungskolbeneinheit |
| 5 | Dämpfungskolben | 41 | Kern |
| 6 | Kolbenstange | 42 | Isoliermaterial |
| 7 | Strömungskanal | 43 | Strömungsventil |
| 8 | Dämpfungsventil | 44 | Einstellmittel |
| 9 | feldempfindliches Medium | 45 | Speichereinrichtung |
| 10 | Dämpferkennlinie | 46 | Steuereinrichtung |
| 11 | Felderzeugungseinrichtung, Spule | 47 | Sensor |
| 12 | Steuerkreislauf | 48 | Bedieneinrichtung |
| 13 | Sammelraum | 49 | Anzeige |
| 14 | Strömungsöffnung | 50 | Elektronikeinheit |
| 15 | Strömungsöffnung | 51 | Bedienknopf |
| 16 | Durchgangsöffnung | 52 | Schritt |
| 17 | Einwegventil | 53 | Internet |
| 18 | Ventilöffnung | 54 | Netzwerkschnittstelle |
| 19 | Fächerwandung | 55 | Funknetzschnittstelle |
| 20 | Dämpfungskanal | 56 | Schritt |
| 21 | Dämpfungskanal | 57 | grafische Bedieneinheit |
| 22 | eine Strömungsseite | 58 | Zeitdauer Druckstufe |
| 23 | andere Strömungsseite | 59 | Zeitdauer Zugstufe |
| 24 | Strömungsrichtung | 60 | Steuerungseinrichtung |
| 25 | Einlauf | 61 | Batterieeinheit |
| 26 | Federeinrichtung | 62 | Grundkennlinie |
| 27 | erste Federkammer | 63 | Zeitpunkt |
| 28 | zweite Federkammer | 64 | Zeitpunkt |
| 29 | Wandstärke | 65 | Zeitpunkt |
| 30 | freie Erstreckung | 66 | max. Einfederung |
| 31 | Länge | 67 | max. Relativgeschwindigkeit |
| 32 | Breite | 68 | max. Dämpfungskraft |
| 33 | Querschnittsfläche | 69 | max. Stromstärke |
| 34 | Querschnittsfläche | 70 | Schritt |
| 35 | Querschnittsfläche | 71 | Ausgleichsraum |
| 36 | Ringleiter | 72 | Ausgleichskolben |
| 73 | Halter | 93 | Übergangsbereich |
| 74 | Magnet | 94 | Steigung |
| 75 | Stößel | 95 | Steigung |
| 77 | max. Relativgeschwindigkeit | 96 | Knickpunkt |
| | | 97 | Pfeil |
| 78 | max. Dämpfungskraft | 98 | Steigung |
| 79 | max. Stromstärke | 99 | Steigung |
| 80 | Relativbewegung | 100 | Stoßdämpfer |
| 81 | Kennwert | 101 | Komponente erstes Ende |
| 82 | Relativgeschwindigkeit | 102 | Komponente zweites Ende |
| 83 | einzustellende Feldstärke | 111 | Vorderrad |
| 84 | Dämpfungskraft | 112 | Hinterrad |
| 85 | Ereignis | 113 | Rahmen |
| 86 | Relativposition | 114 | Federgabel |
| 87 | Zeitabstand | 115 | Hinterraddämpfer |
| 90 | Dämpferkennlinie | 116 | Lenker |
| 91 | Low-Speed-Bereich | 117 | Sattel |
| 92 | High-Speed-Bereich | 200 | Fahrrad |

## Patentansprüche

1. Stoßdämpfer (100) für ein wenigstens teilweise muskelbetriebenes Fahrrad (200) mit einer Dämpfereinrichtung (1), der eine erste und wenigstens eine zweite Dämpferkammer (3, 4) zugeordnet sind, welche über wenigstens ein Dämpfungsventil (8) miteinander hydraulisch gekoppelt sind, wobei in dem Dämpfungsventil (8) wenigstens ein Strömungskanal (7) mit einem feldempfindlichen rheologischen Medium (9) vorgesehen ist, wobei dem wenigstens einen Dämpfungsventil (8) wenigstens eine Felderzeugungseinrichtung (11) zugeordnet ist, welche zur Erzeugung und Steuerung einer Feldstärke (12) in dem Strömungskanal (7) des Dämpfungsventils (8) dient, wobei das Dämpfungsventil (8) an einer Dämpfungskolbeneinheit (40) angeordnet ist, welche den Dämpfungskolben (5) und eine Kolbenstange (6) umfasst,
**dadurch gekennzeichnet,**
**dass** der Strömungskanal (7) in dem Dämpfungsventil (8) wenigstens einen Sammelraum (13) umfasst, welcher über ein Mehrzahl an Strömungsöffnungen (14, 15) hydraulisch mit der ersten Dämpferkammer (3) verbunden ist, wobei wenigstens eine Strömungsöffnung (14) als Durchgangsöffnung (16) und wenigstens eine Strömungsöffnung (15) als mit einem Einwegventil (17) versehene verschließbare Ventilöffnung (18) ausgebildet ist,
und **dass** der Sammelraum (13) hydraulisch über wenigstens eine Mehrzahl an durch jeweils eine Fächerwandung (19) voneinander getrennten fächerartigen Dämpfungskanälen (20, 21) hydraulisch mit der zweiten Dämpferkammer (4) verbunden ist.

2. Stoßdämpfer (100) nach Anspruch 1, wobei die fächerartigen Dämpfungskanäle (20, 21) derart angeordnet sind, dass sie jeweils bei der Druckstufen- und der Zugstufendämpfung aktiv sind.

3. Stoßdämpfer (100) nach einem der vorhergehenden Ansprüche, wobei die Einwegventile (17) derart angeordnet und strukturiert sind, dass sie bei der Druckstufendämpfung automatisch öffnen und bei der Zugstufendämpfung automatisch schließen.

4. Stoßdämpfer (100) nach einem der vorhergehenden Ansprüche, wobei die mit einem Einwegventil (17) versehenen Strömungsöffnungen (15) im Wesentlichen an dem Dämpfungskolben (5) angeordnet sind und insbesondere im Wesentlichen axial ausgerichtet sind.

5. Stoßdämpfer (100) nach einem der vorhergehenden Ansprüche, wobei wenigstens eine Durchgangsöffnung (16) an der Kolbenstange (6) vorgesehen ist und insbesondere im Wesentlichen radial ausgerichtet ist und wobei vorzugsweise die Durchgangsöffnung (16) an der Kolbenstange (6) einen zum Dämpfungskolben (5) schräg auslaufenden Einlauf (25) aufweist, der eine Endanschlagdämpfung bewirkt.

6. Stoßdämpfer (100) nach einem der vorhergehenden Ansprüche, wobei wenigstens eine Federeinrichtung (26) vorgesehen ist, die eine erste und wenigstens eine zweite mit einem kompressiblen Medium versehene Federkammer (27, 28) umfasst und wobei vorzugsweise die Dämpfereinrichtung (1) in einem Dämpfergehäuse (2) angeordnet ist, welches bei einer Einfederung in die Federeinrichtung (26) eintaucht, wozu insbesondere wenigstens die zweite Federkammer (27) wenigstens die erste Dämpferkammer (3) wenigstens im eingefederten Zustand wenigstens teilweise radial umgibt oder wobei die Dämpfereinrichtung (1) und die Federeinrichtung (26) separat angeordnet sind.

7. Stoßdämpfer (100) nach dem vorhergehenden Anspruch, wobei ein Federungskolben (37) vorgesehen ist, der relativ zu der Kolbenstange (6) beweglich angeordnet ist, wobei der Federungskolben (37) insbesondere dazu geeignet ist, die Durchgangöffnung (16) beim Einfedern zu verschließen.

8. Stoßdämpfer (100) nach einem der vorhergehenden Ansprüche, wobei der Abschluss des Dämpfergehäuses geeignet ist, die Durchgangöffnung (16) beim Einfedern zu verschließen.

9. Stoßdämpfer (100) nach einem der vorhergehenden Ansprüche, wobei wenigstens ein Dämpfungskanal (20, 21) einem sich in radialer Richtung erstreckenden Feld (10) der Felderzeugungseinrichtung (11) aussetzbar ist.

10. Stoßdämpfer (100) nach einem der vorhergehenden Ansprüche, wobei wenigstens ein magnetisch leitender Ringleiter (36) die Felderzeugungseinrichtung (11) und/oder die Dämpfungskanäle (20, 21) radial nach außen hin umgibt.

11. Stoßdämpfer (100) nach einem der vorhergehenden Ansprüche, wobei die Fächerwandung (19) eine geringere Wandstärke (29) hat als das doppelte einer geringsten freien Erstreckung (30) eines Dämpfungskanals (20, 21) quer zur Strömungsrichtung (24) und/oder wobei eine Querschnittsfläche (33) der Fächerwandung (19) kleiner als eine Querschnittsfläche (34, 35) wenigstens eines Dämpfungskanals (20, 21) ist und/oder wobei die Fächerwandung (19) eine Wandstärke (29) aufweist, die kleiner als ein Zehntel der Länge (31) der Fächerwandung (19) in Strömungsrichtung (24) beträgt und/oder wobei die Fächerwandung (19) eine Wandstärke (29) aufweist, die kleiner als ein Fünftel der Breite (32) der Fächerwandung (19) quer zur Strömungsrichtung (24) beträgt.

12. Stoßdämpfer (100) nach einem der vorhergehenden Ansprüche, wobei der Dämpfungskanal (20) so angeordnet ist, dass der Dämpfungskanal (20) in der Druckstufe und in der Zugstufe durchströmt wird, und wobei das Dämpfungsventil (8) für die Druckstufe und die Zugstufe getrennte Strömungsventile umfasst.

13. Stoßdämpfer (100) nach dem vorhergehenden Anspruch, wobei wenigstens der Durchflußwiderstand durch wenigstens ein austauschbares Strömungsventil einstellbar ist, um eine Grundkurve der Dämpferkennlinie einzustellen.

14. Stoßdämpfer (100) nach einem der beiden vorhergehenden Ansprüche, wobei wenigstens der Durchflußwiderstand durch wenigstens ein Strömungsventil mit wenigstens einem mechanischen Einstellmittel (44) einstellbar ist, um eine Grundkurve der Dämpferkennlinie einzustellen, wobei insbesondere wenigstens ein Strömungsventil in der Druckstufe und wenigstens ein Strömungsventil in der Zugstufe mit jeweils wenigstens einem mechanischen Einstellmittel (44) oder mit einem austauschbaren Strömungsventil einstellbar sind, um eine Grundkurve der Dämpferkennlinie einzustellen.

## Claims

1. Shock absorber (100) for an at least partially muscle-powered bicycle (200) having a damper device (1) having a first and at least one second damper chamber (3, 4) assigned thereto which are hydraulically coupled with one another through at least one damping valve (8), wherein the damping valve (8) is provided with at least one flow duct (7) with a field-sensitive, rheological medium (9), wherein the at least one damping valve (8) has at least one field generating device (11) assigned to it which serves to generate and control a field intensity (12) in the flow duct (7) of the damping valve (8), wherein the damping valve (8) is disposed at a damping piston unit (40) comprising the damping piston (5) and a piston rod (6),
**characterised in**
**that** the flow duct (7) in the damping valve (8) comprises at least one collection chamber (13) which is hydraulically connected with the first damper chamber (3) through a plurality of flow apertures (14, 15), wherein at least one flow aperture (14) is configured as a through hole (16) and at least one flow aperture (15), as a closable valve opening (18) provided with a one-way valve (17),
and **that** the collection chamber (13) is hydraulically connected hydraulically with the second damper chamber (4) via at least a plurality of fan-type damping ducts (20, 21) each separated from one another by a fan wall (19).

2. The shock absorber (100) according to claim 1 wherein the fan-type damping ducts (20, 21) are arranged such that they are active both in compression stage and rebound stage damping.

3. The shock absorber (100) according to any of the preceding claims wherein the one-way valves (17) are disposed and structured such that they automatically open in compression stage damping and automatically close in rebound stage damping.

4. The shock absorber (100) according to any of the preceding claims wherein the flow apertures (15) provided with a one-way valve (17) are substantially disposed at the damping piston (5) and are in particular substantially oriented axially.

5. The shock absorber (100) according to any of the preceding claims wherein at least one through hole (16) is provided at the piston rod (6) and is in particular substantially oriented radially and wherein the through hole (16) at the piston rod (6) preferably comprises an inlet (25) terminating inclined toward the damping piston (5) and causing end stop cushioning.

6. The shock absorber (100) according to any of the preceding claims wherein at least one spring device (26) is provided comprising a first and at least one second spring chamber (27, 28) provided with a compressible medium and wherein the damper device (1) is preferably disposed in a damper housing (2) which in compressing dives into the spring device (26) to which end in particular at least the second spring chamber (27) radially surrounds at least in part at least the first damper chamber (3) at least in the rebound state or wherein the damper device (1) and the spring device (26) are disposed separately.

7. The shock absorber (100) according to the preceding claim wherein a spring piston (37) is provided which is disposed movable relative to the piston rod (6), wherein the spring piston (37) is in particular suitable to close the through hole (16) in compressing.

8. The shock absorber (100) according to any of the preceding claims wherein the end of the damper housing is suitable for closing the through hole (16) in compressing.

9. The shock absorber (100) according to any of the preceding claims wherein at least one damping duct (20, 21) can be exposed to a field (10) of the field generating device (11) extending in the radial direction.

10. The shock absorber (100) according to any of the preceding claims wherein at least one magnetically conducting ring conductor (36) radially outwardly surrounds the field generating device (11) and/or the damping ducts (20, 21).

11. The shock absorber (100) according to any of the preceding claims wherein the fan wall (19) has a wall thickness (29) that is less than twice a lowest clear extension (30) of a damping duct (20, 21) transverse to the flow direction (24) and/or wherein a cross-sectional area (33) of the fan wall (19) is smaller than a cross-sectional area (34, 35) of at least one damping duct (20, 21) and/or wherein the fan wall (19) comprises a wall thickness (29) that is smaller than one tenth of the length (31) of the fan wall (19) in the flow direction (24) and/or wherein the fan wall (19) comprises a wall thickness (29) that is smaller than one fifth of the width (32) of the fan wall (19) transverse to the flow direction (24).

12. The shock absorber (100) according to any of the preceding claims wherein the damping duct (20) is disposed such that flow passes through the damping duct (20) in the compression stage and in the rebound stage and wherein the damping valve (8) comprises separate flow valves for the compression stage and the rebound stage.

13. The shock absorber (100) according to the preceding claim wherein at least the flow resistance is adjustable by at least one exchangeable flow valve for adjusting a basic curve of the characteristic damper curve.

14. The shock absorber (100) according to any of the two preceding claims wherein at least the flow resistance is adjustable by at least one flow valve by means of at least one mechanical adjusting means (44) for adjusting a basic curve of the characteristic damper curve, wherein in particular at least one flow valve in the compression stage and at least one flow valve in the rebound stage are adjustable by way of at least one mechanical adjusting means (44) each or by way of an exchangeable flow valve for adjusting a basic curve of the characteristic damper curve.

## Revendications

1. Amortisseur de chocs (100) pour une bicyclette (200) entraînée au moins en partie par force musculaire et comprenant un dispositif amortisseur (1) auquel sont associées une première et au moins une deuxième chambre d'amortissement (3, 4) qui sont couplées de façon hydraulique entre elles par l'intermédiaire d'au moins une valve d'amortissement (8), dans ladite valve d'amortissement (8) étant prévu au moins un canal d'écoulement (7) comprenant un milieu rhéologique (9) sensible au champ, à ladite au moins une valve d'amortissement (8) étant associé au moins un dispositif de génération de champ (11) qui sert à générer et à commander une intensité de champ (12) dans le canal d'écoulement (7) de la valve d'amortissement (8), dans lequel ladite valve d'amortissement (8) est disposée sur une unité à piston d'amortissement (40) qui comprend le piston d'amortissement (5) et une tige de piston (6), **caractérisé par le fait que** le canal d'écoulement (7) dans la valve d'amortissement (8) comprend au moins un espace collecteur (13) qui est relié de façon hydraulique, par une pluralité d'ouvertures d'écoulement (14, 15), à la première chambre d'amortissement (3), dans lequel au moins une ouverture d'écoulement (14) est conçue en tant qu'ouverture de passage (16) et au moins une ouverture d'écoulement (15) est conçue en tant qu'ouverture de valve (18) apte à être fermée et munie d'une valve à voie unique (17), et que l'espace collecteur (13) est relié de façon hydraulique à la deuxième chambre d'amortissement (4) par l'intermédiaire d'au moins une pluralité de canaux d'amortissement (20, 21) de type éventail séparés respectivement les uns des autres par une paroi en éventail (19).

2. Amortisseur de chocs (100) selon la revendication 1, dans lequel les canaux d'amortissement (20, 21) de type éventail sont agencés de telle sorte qu'ils sont actifs chacun dans l'amortissement en compression et en détente.

3. Amortisseur de chocs (100) selon l'une quelconque des revendications précédentes, dans lequel les valves à voie unique (17) sont agencées et structurées de telle sorte qu'elles s'ouvrent automatiquement lors de l'amortissement en compression et se ferment automatiquement lors de l'amortissement en détente.

4. Amortisseur de chocs (100) selon l'une quelconque des revendications précédentes, dans lequel les ouvertures d'écoulement (15) pourvues d'une valve à voie unique (17) sont disposées pour l'essentiel sur le piston d'amortissement (5) et, en particulier, sont alignés pour l'essentiel axialement.

5. Amortisseur de chocs (100) selon l'une quelconque des revendications précédentes, dans lequel au moins une ouverture de passage (16) est prévue sur la tige de piston (6) et, en particulier, est alignée pour l'essentiel radialement, et dans lequel, de préférence, l'ouverture de passage (16) sur la tige de piston (6) présente une entrée (25) qui se termine obliquement vers le piston d'amortissement (5) et qui provoque un amortissement de butée de fin de course.

6. Amortisseur de chocs (100) selon l'une quelconque des revendications précédentes, dans lequel au moins un dispositif à ressort (26) est prévu qui comprend une première et au moins une deuxième chambre à ressort (27, 28) pourvues d'un milieu compressible, et dans lequel, de préférence, le dispositif amortisseur (1) est agencé dans un boîtier d'amortisseur (2) qui plonge dans le dispositif à ressort (26) lors d'une compression, à cet effet, en particulier, au moins la deuxième chambre à ressort (27) entoure au moins en partie de façon radiale au moins la première chambre d'amortissement (3), au moins à l'état comprimé, ou dans lequel le dispositif amortisseur (1) et le dispositif à ressort (26) sont disposés séparément.

7. Amortisseur de chocs (100) selon la revendication précédente, dans lequel un piston de suspension (37) est prévu qui est agencé de manière à être mobile par rapport à la tige de piston (6), dans lequel le piston de suspension (37) est adapté en particulier pour fermer l'ouverture de passage (16) lors de la compression.

8. Amortisseur de chocs (100) selon l'une quelconque des revendications précédentes, dans lequel la terminaison du boîtier d'amortisseur est adaptée pour fermer l'ouverture de passage (16) lors de la compression.

9. Amortisseur de chocs (100) selon l'une quelconque des revendications précédentes, dans lequel au moins un canal d'amortissement (20, 21) peut être exposé à un champ (10) du dispositif générateur de champ (11), qui s'étend dans la direction radiale.

10. Amortisseur de chocs (100) selon l'une quelconque des revendications précédentes, dans lequel au moins un conducteur annulaire (36) magnétiquement conducteur entoure radialement vers l'extérieur le dispositif générateur de champ (11) et/ou les canaux d'amortissement (20, 21).

11. Amortisseur de chocs (100) selon l'une quelconque des revendications précédentes, dans lequel la paroi en éventail (19) présente une épaisseur de paroi (29) inférieure à deux fois une extension (30) libre la plus petite d'un canal d'amortissement (20, 21) transversalement à la direction d'écoulement (24), et/ou dans lequel une aire de section droite (33) de la paroi en éventail (19) est inférieure à une aire de section droite (34, 35) d'au moins un canal d'amortissement (20, 21), et/ou dans lequel la paroi en éventail (19) présente une épaisseur de paroi (29) qui est inférieure à un dixième de la longueur (31) de la paroi en éventail (19) dans la direction d'écoulement (24), et/ou dans lequel la paroi en éventail (19) présente une épaisseur de paroi (29) qui est inférieure à un cinquième de la largeur (32) de la paroi en éventail (19) transversalement à la direction d'écoulement (24).

12. Amortisseur de chocs (100) selon l'une quelconque des revendications précédentes, dans lequel ledit canal d'amortissement (20) est agencé de telle sorte que le canal d'amortissement (20) est traversé lors de la phase de compression et lors de la phase de détente, et dans lequel la valve d'amortissement (8) comprend des valves d'écoulement séparées pour la phase de compression et la phase de détente.

13. Amortisseur de chocs (100) selon la revendication précédente, dans lequel au moins la résistance à l'écoulement est réglable par au moins une valve d'écoulement échangeable afin de définir une courbe de base de la courbe caractéristique de l'amortisseur.

14. Amortisseur de chocs (100) selon l'une quelconque des deux revendications précédentes, dans lequel au moins la résistance à l'écoulement est réglable par au moins une valve d'écoulement ayant au moins un moyen de réglage mécanique (44) pour définir une courbe de base de la courbe caractéristique de l'amortisseur, dans lequel, en particulier, au moins une valve d'écoulement dans la phase de compression et au moins une valve d'écoulement dans la phase de détente sont chacune réglables par au moins un moyen de réglage mécanique (44) ou par une valve d'écoulement échangeable afin de définir une courbe de base de la courbe caractéristique de l'amortisseur.
